# EUROPEAN PATENT SPECIFICATION

(11) **EP 2 891 600 B1**
(45) Date of publication and mention of the grant of the patent: **07.12.2016**
(21) Application number: 13833917.1
(22) Date of filing: 20.08.2013
(51) Int. Cl.: B62L 1/00, B60T 8/171, B62H 1/02, B62J 99/00, B62K 23/06, B62L 3/08

(54) **Two-Wheeled Automobile**
Zweirädriges Kraftfahrzeug
Véhicule automobile à deux roues

(30) Priority: 29.08.2012 JP 2012189011
(43) Date of publication of application: 08.07.2015
(73) Proprietor: Honda Motor Co., Ltd., Minato-ku Tokyo 107-8556 (JP)
(72) Inventor: UCHIDA Odai, Wako-shi Saitama 351-0193 (JP); ITO Shinji, Wako-shi Saitama 351-0193 (JP); NAKAIE Hirokatsu, Wako-shi Saitama 351-0193 (JP); KITA Takehiko, Wako-shi Saitama 351-0193 (JP)
(74) Representative: Kiwit, Benedikt
(86) International application number: PCT/JP2013/072167
(87) International publication number: WO 2014/034475

(56) References cited:
- JP-A- 2000 272 572
- JP-A- 2000 280 969
- JP-A- 2009 102 005
- JP-A- 2011 051 417

## Description

### TECHNICAL FIELD

The present invention relates to a two-wheeled automobile that includes a front wheel brake operation element for braking a front wheel and a linked brake operation element for linking and braking the front wheel and a rear wheel.

### BACKGROUND ART

A two-wheeled automobile in which a front wheel is braked in response to operation of a front wheel brake operation element and the front wheel and a rear wheel are linked and braked in response to operation of a linked brake operation element is already known in Patent Document 1 and Patent Document 2. In an arrangement disclosed by Patent Document 1, a pair of cables individually connected to the front wheel brake operation element and the linked brake operation element are coupled in parallel to a brake arm of a single drum brake fitted on the front wheel, and in an arrangement disclosed by Patent Document 2, a disk brake provided with a three pot caliper having a single pot connected to a first master cylinder outputting fluid pressure in response to operation of the front wheel brake operation element and a pair of pots connected to a second master cylinder outputting fluid pressure in response to operation of the linked brake operation element is fitted on the front wheel.

### RELATED ART DOCUMENTS

### PATENT DOCUMENTS

Patent Document 1: Japanese Patent Application Laid-open No. 2010-149685
Patent Document 2: Japanese Patent Application Laid-open No. 2010-185501

### SUMMARY OF THE INVENTION

### PROBLEMS TO BE SOLVED BY THE INVENTION

In recent years, from the viewpoint of merchandise appeal, for a two-wheeled automobile there has been a demand to employ the disk brake disclosed by Patent Document 2 rather than the drum brake disclosed by Patent Document 1, but since a disk brake having a three pot caliper is relatively expensive, there has been a desire for the development of a linked brake system in which a front wheel is braked by means of two independent systems, that is, a front wheel brake operation element and a linked brake operation element, with an inexpensive arrangement that does not use an expensive three pot caliper.

The present invention has been accomplished in light of such circumstances, and it is an object thereof to provide a two-wheeled automobile that enables a linked brake system to be arranged at low cost while employing a disk brake for braking the front wheel.

### MEANS FOR SOLVING THE PROBLEMS

In order to attain the above object, according to the present invention, there is provided a two-wheeled automobile comprising a front wheel brake operation element for braking a front wheel and a linked brake operation element for linking and braking the front wheel and a rear wheel, wherein the front wheel is fitted with a disk brake that actuates in response to operation of the front wheel brake operation element and a drum brake that actuates in response to operation of the linked brake operation element such that the disk brake is disposed on one side in a width direction of the front wheel and the drum brake is disposed on the other side in the width direction of the front wheel, and the drum brake has a brake drum disposed so as to open on the other side in the width direction of the front wheel, and the drum brake has an anchor pin supported on a brake panel fixed to a front fork and a brake shoe pivotably supported on the anchor pin and capable of coming into sliding contact with the brake drum, the anchor pin and the brake shoe being disposed so as to be offset toward the side opposite to the disk brake from the middle position in the width direction of the front wheel.

According to a first preferred embodiment of the present invention, in addition to the invention as described above, a side stand is mounted on a vehicle body frame on the other side in the vehicle width direction.

According to a second preferred embodiment of the present invention, in addition to the invention or the first preferred embodiment of the present invention as described above, a wheel speed sensor is disposed on a radially inner side of a brake disk of the disk brake.

Moreover, according to a third preferred embodiment of the present invention, in addition to the second preferred embodiment of the present invention as described above, a recess part positioned in the radially inward direction of the brake disk is formed in the middle of an end part on the disk brake side of a wheel of the front wheel, and at least part of the wheel speed sensor is housed in the recess part.

A right brake lever 21 of an embodiment corresponds to the front wheel brake operation element of the present invention, and a left brake lever 23 of the embodiment correspond to the linked brake operation element of the present invention.

### EFFECTS OF THE INVENTION

In accordance with the present invention, the front wheel is fitted with the disk brake that actuates in response to operation of the front wheel brake operation element and the drum brake that actuates in response to operation of the linked brake operation element, the linked brake system can be arranged without using an expensive three pot caliper and, moreover, since the disk brake is fitted on one side in the width direction of the front wheel and the drum brake is fitted on the other side in the width direction of the front wheel, and both of the brake shoe and the anchor pin are disposed so as to be offset toward the side opposite to the disk brake from the middle position in the width direction of the front wheel, a balance of weight in the left-and-right direction of the front wheel can be achieved.

Furthermore, in accordance with the first preferred embodiment of the present invention, since the side stand is disposed on the drum brake side in the vehicle width direction, when parking is carried out by erecting the side stand while turning the handlebars toward the side stand side, the front wheel appears to be equipped only with the disk brake, thus improving the appearance.

In accordance with the second preferred embodiment of the present invention, since the wheel speed sensor is disposed on the radially inner side of the brake disk, it is possible to utilize effectively a space inside the brake disk.

Moreover, in accordance with the third preferred embodiment of the present invention, since at least part of the wheel speed sensor is housed in the recess part formed in the middle of an end part on the disk brake side of the wheel of the front wheel, it is possible by means of the wheel of the front wheel to protect a portion of the wheel speed sensor that is housed in the recess part.

### BRIEF DESCRIPTION OF DRAWINGS

FIG. 1 is a left side view of a two-wheeled automobile. (first embodiment)
FIG. 2 is a diagram showing the arrangement of a brake device. (first embodiment)
FIG. 3 is a sectional view along line 3-3 in FIG. 1. (first embodiment)

### EXPLANATION OF REFERENCE NUMERALS AND SYMBOLS

- 6L: Front fork

- 18: Side stand
- 21: Right brake lever, which is a front wheel brake operation element
- 23: Left brake lever, which is a linked brake operation element
- 25: Wheel
- 30: Disk brake
- 31: Drum brake
- 38: Brake disk
- 51: Wheel speed sensor
- 58: Recess part
- 60: Brake drum
- 61: Brake panel
- 62: Brake shoe
- 68: Anchor pin
- F: Vehicle body frame
- WF: Front wheel
- WR: Rear wheel

### MODE FOR CARRYING OUT THE INVENTION

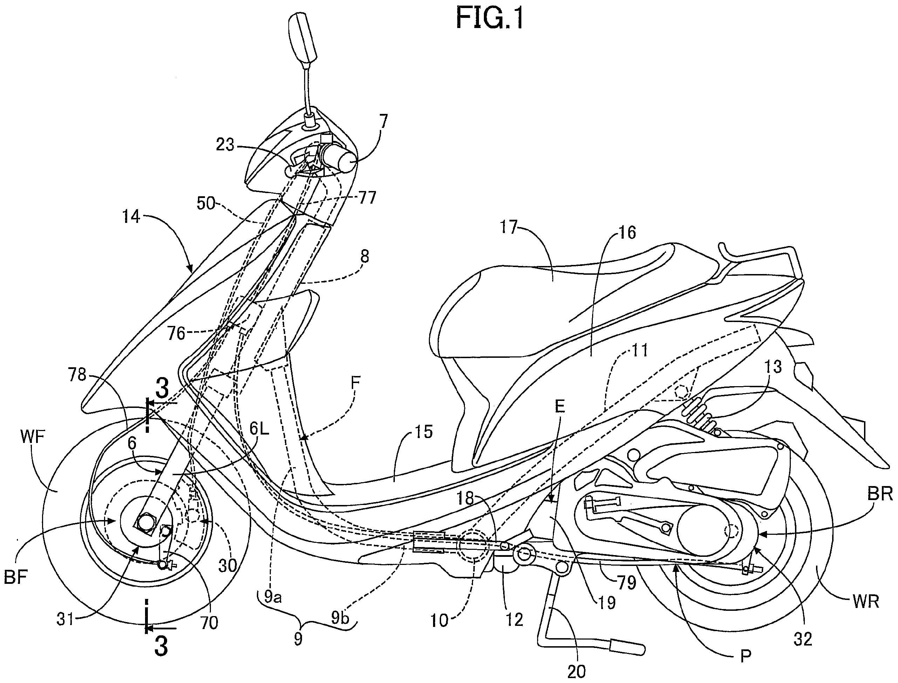

A mode for carrying out the present invention is explained by reference to the attached FIG. 1 to FIG. 3; in the explanation below, front-and-rear, left-and-right, and up-and-down refer to directions when viewed by an occupant riding on a two-wheeled automobile.

### FIRST EMBODIMENT

First, in FIG. 1, a vehicle body frame F of a scooter type two-wheeled automobile includes a head pipe 8 steerably supporting a front fork 6 that axially supports a front wheel WF and bar-shaped handlebars 7 that are linked to the front fork 6, a down tube 9 having an inclined portion 9a extending downwardly to the rear from the head pipe 8 and a horizontal portion 9b extending rearwardly from the lower end of the inclined portion 9a, a cross member 10 extending in the vehicle width direction and fixed to the rear end of the down tube 9, and a pair of left and right rear frame pipes 11 having front ends fixed to left and right sides of the cross member 10 and extending upwardly to the rear.

A bracket 12 is provided on front end parts of the rear frame pipes 11, a front part of a power unit P formed from an internal combustion engine E and a transmission (not illustrated) provided between the internal combustion engine E and a rear wheel WR is vertically swingably supported on the bracket 12 via a link, which is not illustrated, and the rear wheel WR disposed on the rear right side of the power unit P is axially supported on a rear part of the power unit P. Furthermore, a rear cushion 13 is provided between the power unit P and rear parts of the rear frame pipes 11 in the vehicle body frame F.

The vehicle body frame F is covered by a vehicle body cover 14 made of a synthetic resin, part of the vehicle body cover 14 forms a step floor 15 for the feet of an occupant to be placed on and a frame body cover 16 connected to the step floor 15 and covering a vehicle body rear part from opposite sides, and a tandem type riding seat 17 is provided on the frame body 16.

A side stand 18 is pivotably mounted on the rear left side of the horizontal portion 9b of the down tube 9 of the vehicle body frame F. Furthermore, a main stand 20 is pivotably mounted on an engine main body 19 of the internal combustion engine E forming part of the power unit P.

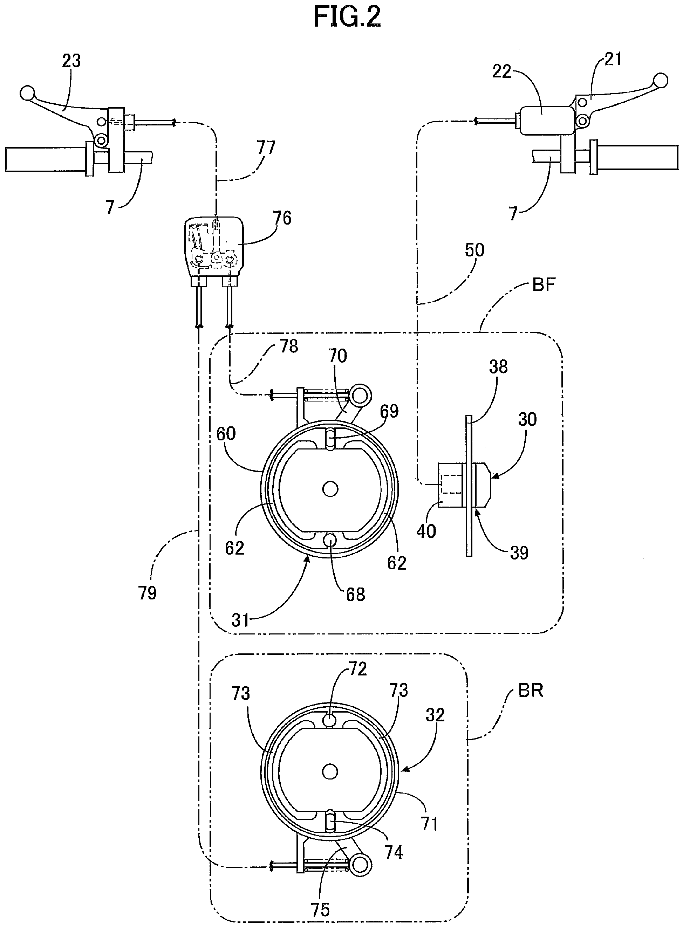

In FIG. 2, a right brake lever 21, which is a front wheel brake operation element for braking the front wheel WF, is pivotably mounted on a right end part of the handlebars 7, and a master cylinder 22 that outputs fluid pressure in response to a pivoting operation of the right brake lever 21 is also mounted thereon. Furthermore, a left brake lever 23, which is a linked brake operation element for linking and braking the front wheel WF and the rear wheel WR, is pivotably mounted on a left end part of the handlebars 7.

A front wheel brake device BF for braking the front wheel WF is formed from a disk brake 30 that actuates in response to a pivoting operation of the right brake lever 21 and a drum brake 31 that actuates in response to a pivoting operation of the left brake lever 23, and a rear wheel brake device BR for braking the rear wheel WR is formed from a drum brake 32 that actuates in response to a pivoting operation of the left brake lever 23.

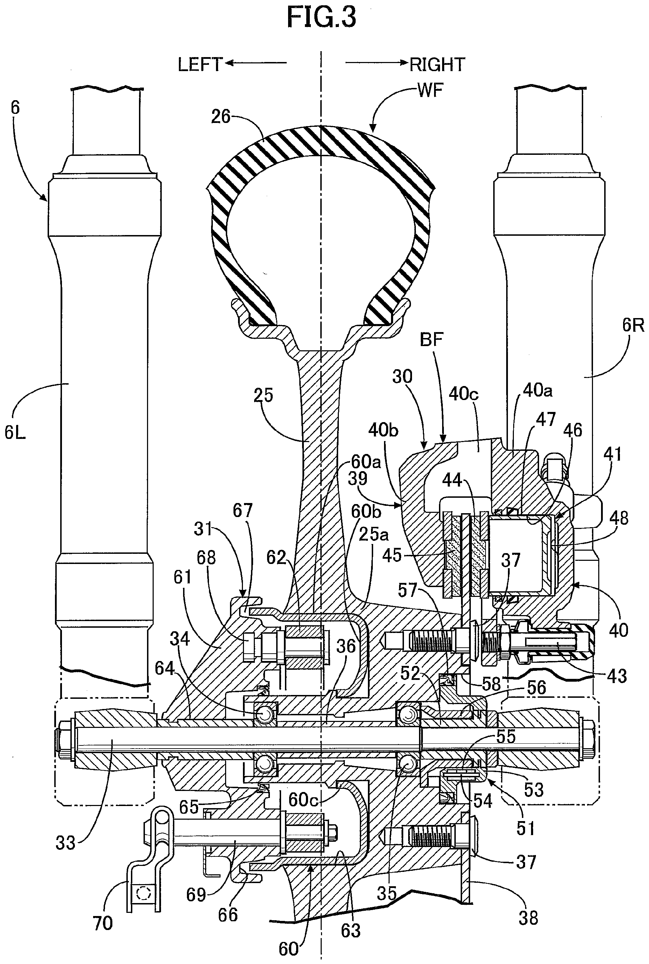

Referring in addition to FIG. 3, the front wheel WF is formed by fitting a tire 26 on the outer periphery of a wheel 25. The front fork 6 includes a left leg portion 6L disposed on the left side of the front wheel WF and a right leg portion 6R disposed on the right side of the front wheel WF, and opposite end parts of an axle 33 extending through a wheel hub 25a of the wheel 25 are fixed between lower end parts of the left leg portion 6L and the right leg portion 6R. A ball bearing 34 is disposed between the inner periphery on the left side of the wheel hub 25a and the outer periphery of the axle 33, a ball bearing 35 is disposed between the inner periphery on the right side of the wheel hub 25a and the outer periphery of the axle 33, and a cylindrical spacer 36 coaxially surrounding the axle 33 is disposed between inner races of the two ball bearings 34 and 35.

The disk brake 30 and the drum brake 31 are fitted on the front wheel WF such that the disk brake 30 is disposed on one side in the width direction of the front wheel WF (in this embodiment the right side) and the drum brake 31 is disposed on the other side in the width direction of the front wheel WF (in this embodiment the left side).

The disk brake 30 includes a brake disk 38 that rotates together with the front wheel WF and a caliper 39 disposed so as to straddle the outer periphery of the brake disk 38. The brake disk 38 is secured to a right side face of the wheel hub 25a of the wheel 25 by means of a plurality of bolts 37. The caliper 39 is formed by providing a braking cylinder 41 having an axis parallel to the rotational axis of the brake disk 38, that is, the rotational axis of the front wheel WF, on a caliper body 40, which is disposed so as to straddle the brake disk 38.

The caliper body 40 is formed from an action portion 40a and a reaction portion 40b disposed on opposite sides of the brake disk 38, and a bridging portion 40c straddling the brake disk 38 so as to link the action portion 40a and the reaction portion 40b, the caliper body 40 being slidably supported on a bracket 42, which is provided on a lower part of the right leg portion 6R of the front fork 6, via a pair of sliding pins 43 extending in parallel to the rotational axis of the front wheel WF.

Friction pads 44 and 45 are disposed respectively between the action portion 40a and the brake disk 38 and between the reaction portion 40b and the brake disk 38. The braking cylinder 41 is provided on the action portion 40a of the caliper body 40, and a braking piston 47 is slidably fitted into a bottomed cylinder hole 46 provided in the action portion 40a so as to open on the friction pad 44 side.

A hydraulic chamber 48 is formed between the braking piston 47 and the action portion 40a of the caliper body 40, and a hose 50 guiding fluid pressure from the master cylinder 22 (see FIG. 1 and FIG. 2) is connected to the action portion 40a of the caliper body 40 so as to communicate with the hydraulic chamber 48.

A wheel speed sensor 51 is disposed on the radially inner side of the brake disk 38 of the disk brake 30. On the other hand, a recess part 58 positioned in the radially inward direction of the brake disk 38 is formed in the middle of an end part on the disk brake 30 side (in this embodiment an end part on the right side) of the wheel hub 25a of the wheel 25 of the front wheel WF, and at least part (a majority in this embodiment) of the wheel speed sensor is housed in the recess part 58.

The wheel speed sensor 51 includes a housing 53 made of a synthetic resin mold bonded to a cylindrical member 52 made of a metal and having the axle 33 inserted therethrough, a circuit board 54 housed in and fixed to the housing 53 so as to be disposed in the radially outward direction of the cylindrical member 52, a magnetic transducer element 55 mounted on the circuit board 54, and a cylindrical magnet 56 relatively rotatably inserted into the housing 53 while coaxially surrounding the cylindrical member 52.

The housing 53 is fixed to the right leg portion 6R of the front fork 6 so as to be inserted into the recess part 58 with an annular seal member 57 disposed between the housing 53 and the wheel hub 25a of the wheel 25. The magnet 56 is fixed to the wheel hub 25a so as to be disposed further outwardly in the vehicle width direction than the ball bearing 35 disposed between the inner periphery on the right side of the wheel hub 25a and the outer periphery of the axle 33, and rotates together with the front wheel WF.

In accordance with the wheel speed sensor 51, the rotational speed of the front wheel WF can be detected by detecting by means of the magnetic transducer element 55 a change in the magnetic pole accompanying rotation of the magnet 56 together with the front wheel WF.

Furthermore, the drum brake 31 includes a brake drum 60 provided on the wheel hub 25a so as to open on the side opposite to the disk brake 30, a brake panel 61 relatively rotatably supported on the axle 33 so as to close the open end of the brake drum 60, and a pair of brake shoes 62 and 62 pivotably supported on the brake panel 61 so as to be in sliding contact with the brake drum 60.

An annular recess part 63 is provided on an end face, on the side opposite to the disk brake 30, of the wheel hub 25a. On the other hand, the brake drum 60 is formed so as to integrally have an outer tube portion 60a, a disk-shaped portion 60b protruding radially inwardly from one end of the outer tube portion 60a, and an inner tube portion 60c extending slightly from the inner periphery of the disk-shaped portion 60b in the same direction as the direction in which the outer tube portion 60a extends, and is fitted in and fixed to the recess part 63 so as to open on the other side in the vehicle width direction, that is, the side opposite to the disk brake 30.

A cylindrical member 64 coaxially surrounding the axle 33 is mold bonded to the brake panel 61, and due to this cylindrical member 64 being sandwiched between the left leg portion 6L of the front fork 6 and the inner race of the ball bearing 34 disposed between the inner periphery on the left side of the wheel hub 25a and the outer periphery of the axle 33, the brake panel 61 is fixed to the left leg portion 6L of the front fork 6, an annular seal member 65 being disposed between the brake panel 61 and the wheel hub 25a. Furthermore, an annular groove 66 having the other end part of the outer tube portion 60a of the brake drum 60 inserted thereinto is provided on the outer periphery of the brake panel 61, and a labyrinth passage 67 for suppressing the entry of dirt or dust from the outside is formed between the brake panel 61 and the brake drum 60.

End parts of the pair of brake shoes 62 are pivotably supported by the brake panel 61 via an anchor pin 68 (see FIG. 2), and the anchor pin 68 and the brake shoes 62 are disposed so as to be offset toward the side opposite to the disk brake from the middle position in the width direction of the front wheel. Further, a camshaft 69, against which the other end parts of the brake shoes 62 abut, is pivotably supported on the brake panel 61. Furthermore, a base end part of a brake arm 70 is fixed to the camshaft 69 on the outside of the brake panel 61, and when the brake arm 70 and the camshaft 69 pivot the brake shoes 62 come into frictional contact with an inner face of the outer tube portion 60a of the brake drum 60, thus braking the front wheel WF.

Referring to FIG. 2, the drum brake 32 fitted on the rear wheel WR includes, as in the drum brake 31, a brake drum 71 rotating together with the rear wheel WR, a brake panel (not illustrated) closing the open end of the brake drum 71, a pair of brake shoes 73 and 73 having end parts pivotably supported on the brake panel via an anchor pin 72 so as to be in sliding contact with the brake drum 71, and a camshaft 74 pivotably support on the brake panel with the other ends of the brake shoes 73 abutting thereagainst, a base end part of a brake arm 75 being fixed to the camshaft 74.

The operating force due to the left brake lever 23 is inputted via a common brake cable 77 to an equalizer 76 disposed beneath the handlebars 7 and supported on the head pipe 8 or an equalizer supported on the handlebars 7, and the operating force branches from the equalizer 76 to the front wheel WF side and the rear wheel WR side. A front wheel brake cable 78 for transmitting the operating force branching from the equalizer 76 to the front wheel WF side is linked to the extremity of the brake arm 70 of the drum brake 30 of the front wheel WF, and a rear wheel brake cable 79 for transmitting the operating force branching from the equalizer 76 to the rear wheel WR side is linked to the extremity of the brake arm 75 of the drum brake 31 of the rear wheel WR.

The operation of this embodiment is now explained; since the disk brake 30 that actuates in response to operation of the right brake lever 21 and the drum brake 31 that actuates in response to operation of the left brake lever 23 are fitted on the front wheel WF such that the disk brake 30 is disposed on one side in the vehicle width direction (right side in this embodiment) and the drum brake 31 is disposed on the other side in the vehicle width direction (left side in this embodiment), and the brake drum 60 of the drum brake 31 is disposed so as to open on the other side in the vehicle width direction, it is possible to arrange a linked brake system without using an expensive three pot caliper and, moreover, since the disk brake 30 and the drum brake 31 are fitted on the front wheel WF so as to be divided between the left and the right in the vehicle width direction, it is possible to achieve a balance of weight between the left and the right of the front wheel WF.

Furthermore, since the side stand 18 is disposed on the other side in the vehicle width direction, that is, on the drum brake 31 side, when parking is carried out by erecting the side stand 18 while turning the handlebars 7 toward the side stand 18 side, the front wheel WF appears to be fitted only with the disk brake 31, thus improving the appearance.

Moreover, since the wheel speed sensor 51 is disposed on the radially inner side of the brake disk 38 of the disk brake 30, it is possible to utilize effectively a space inside the brake disk 38.

Furthermore, since the recess part 58 positioned in the radially inward direction of the brake disk 38 is formed in the middle of the end part on the disk brake 30 side of the wheel 25 of the front wheel WF, and at least part of the wheel speed sensor 51 is housed in the recess part 58, it is possible to protect by means of the wheel 25 of the front wheel WF a portion of the wheel speed sensor 51 that is housed in the recess part 58.

An embodiment of the present invention is explained above, but the present invention is not limited to the embodiment above and may be modified in a variety of ways as long as the modifications do not depart from the scope of the present invention as laid down in the appended claims.

For example, in the embodiment above, the wheel speed sensor 51 is disposed on the radially inner side of the brake disk 38, but a wheel speed sensor may be incorporated into a brake panel 61 of a drum brake 31.

## Claims

1. A two-wheeled automobile comprising a front wheel brake operation element (21) for braking a front wheel (WF) and a linked brake operation element (23) for linking and braking the front wheel (WF) and a rear wheel (WR), wherein the front wheel (WF) is fitted with a disk brake (30) that actuates in response to operation of the front wheel brake operation element (21) and a drum brake (31) that actuates in response to operation of the linked brake operation element (23) such that the disk brake (30) is disposed on one side in a width direction of the front wheel (WF) and the drum brake (31) is disposed on the other side in the width direction of the front wheel (WF), and the drum brake (31) has a brake drum (60) disposed so as to open on the other side in the width direction of the front wheel (WF), and
the drum brake (31) has an anchor pin (68) supported on a brake panel (61) fixed to a front fork (6L) and a brake shoe (62) pivotably supported on the anchor pin (68) and capable of coming into sliding contact with the brake drum (60), the anchor pin (68) and the brake shoe (62) being disposed so as to be offset toward the side opposite to the disk brake (30) from the middle position in the width direction of the front wheel (WF).

2. The two-wheeled automobile according to Claim 1, wherein a side stand (18) is mounted on a vehicle body frame (F) on the other side in the vehicle width direction.

3. The two-wheeled automobile according to Claim 1 or 2, wherein a wheel speed sensor (51) is disposed on a radially inner side of a brake disk (38) of the disk brake (30).

4. The two-wheeled automobile according to Claim 3, wherein a recess part (58) positioned in the radially inward direction of the brake disk (38) is formed in the middle of an end part on the disk brake (30) side of a wheel (25) of the front wheel (WF), and at least part of the wheel speed sensor (51) is housed in the recess part (58).

## Patentansprüche

1. Fahrzeug mit zwei Rädern, das ein Vorderrad-Bremsbetätigungselement (21) zum Bremsen eines Vorderrads (WF) und ein verbundenes Bremsbetätigungselement (23) zum Verbinden und Bremsen des Vorderrads (WF) und eines Hinterrads (WR) aufweist, wobei das Vorderrad (WF) mit einer Scheibenbremse (30) ausgestattet ist, die in Reaktion auf die Betätigung des Vorderrad-Bremsbetätigungselements (21) ausgelöst wird, und eine Trommelbremse (31), die in Reaktion auf die Betätigung des verbundenen Bremsbetätigungselements (23) ausgelöst wird,
sodass die Scheibenbremse (30) an einer Seite in einer Breitenrichtung des Vorderrads (WF) angeordnet ist, und die Trommelbremse (31) an der anderen Seite in der Breitenrichtung des Vorderrads (WF) angeordnet ist, und die Trommelbremse (31) eine Bremstrommel (60) aufweist, die so angeordnet ist, dass sie sich an der anderen Seite in der Breitenrichtung des Vorderrads (WF) öffnet, und
die Trommelbremse (31) einen Lagerbolzen (68), der an einer an einer Vordergabel (6L) befestigten Bremsplatte (61) gehalten wird, und eine Bremsbacke (62) aufweist, die schwenkbar am Lagerbolzen (68) gehalten wird und dazu ausgestaltet ist, in Schleifkontakt mit der Bremstrommel (60) zu kommen, wobei der Lagerbolzen (68) und die Bremsbacke (62) so angeordnet sind, dass sie in Richtung der Seite gegenüberliegend der Scheibenbremse (30) von der mittleren Position in der Breitenrichtung des Vorderrads (WF) versetzt sind.

2. Fahrzeug mit zwei Rädern nach Anspruch 1, wobei ein Seitenständer (18) an einem Fahrzeugkarosserierahmen (F) an der anderen Seite in Richtung der Fahrzeugbreite angebracht ist.

3. Fahrzeug mit zwei Rädern nach Anspruch 1 oder 2, wobei ein Radgeschwindigkeitssensor (51) an einer radialen Innenseite einer Bremsscheibe (38) der Scheibenbremse (30) angeordnet ist.

4. Fahrzeug mit zwei Rädern nach Anspruch 3, wobei eine Aussparungskomponente (58), die in der radialen Innenrichtung der Bremsscheibe (38) angeordnet ist, in der Mitte einer Endkomponente an der Seite der Scheibenbremse (30) eines Rades (25) des Vorderrads (WF) angeordnet ist, und wenigstens ein Teil des Fahrzeuggeschwindigkeitssensors (51) in der Aussparungskomponente (58) aufgenommen ist.

## Revendications

1. Automobile à deux roues comprenant un élément d'opération de frein de roue avant (21) pour freiner une roue avant (WF) et un élément d'opération de frein unifié (23) pour unifier et freiner la roue avant (WF) et une roue arrière (WR), dans lequel la roue avant (WF) est équipée d'un frein à disque (30) qui s'actionne en réponse à une opération de l'élément d'opération de frein de roue avant (21) et d'un frein à tambour (31) qui s'actionne en réponse à une opération de l'élément d'opération de frein unifié (23), de sorte que le frein à disque (30) soit disposé sur un côté dans une direction de la largeur de la roue avant (WF) et que le frein à tambour (31) soit disposé sur l'autre côté dans la direction de la largeur de la roue avant (WF), et le frein à tambour (31) a un tambour de frein (60) disposé de sorte à s'ouvrir sur l'autre côté dans la direction de la largeur de la roue avant (WF), et
le frein à tambour (31) a un axe de point fixe (68) supporté sur un panneau de frein (61) fixé à une fourche avant (6L) et un segment de frein (62) supporté pivotant sur l'axe de point fixe (68) et pouvant venir en contact glissant avec le tambour de frein (60), l'axe de point fixe (68) et le segment de frein (62) étant disposés de sorte à être décalés vers le côté opposé au frein à disque (30) à partir de la position milieu dans la direction de la largeur de la roue avant (WF).

2. Automobile à deux roues selon la revendication 1, dans lequel une béquille latérale (18) est montée sur une ossature de caisse de véhicule (F) sur l'autre côté dans la direction de la largeur du véhicule.

3. Automobile à deux roues selon la revendication 1 ou 2, dans lequel un capteur de vitesse de roue (51) est disposé sur un côté radialement interne du disque de frein (38) du frein à disque (30).

4. Automobile à deux roues selon la revendication 3, dans lequel une partie d'évidement (58) positionnée dans la direction radialement vers l'intérieur du disque de frein (38) est formée au milieu d'une partie d'extrémité sur le côté frein à disque (30) d'une roue (25) de la roue avant (WF), et au moins une partie du capteur de vitesse de roue (51) est logée dans la partie d'évidement (58).
